# EUROPEAN PATENT SPECIFICATION

(11) **EP 1 784 954 B1**
(45) Date of publication and mention of the grant of the patent: **26.03.2008**
(21) Application number: 04764602.1
(22) Date of filing: 28.08.2004
(51) Int. Cl.: H04L 12/56, H04Q 7/38

(54) **A SYSTEM, AN ARRANGEMENT AND A METHOD FOR PROVIDING CORE NETWORK NODES WITH MOBILE STATION RELATED INFORMATION**
SYSTEM, ANORDNUNG UND VERFAHREN ZUM VERSORGEN VON KERNNETZWERKKNOTEN MIT MOBILSTATIONSBEZOGENEN INFORMATIONEN
SYSTEME, AGENCEMENT ET PROCEDE PERMETTANT D'OBTENIR DES NOEUDS DE RESEAU PRINCIPAL AVEC DES INFORMATIONS RELATIVES A DES STATIONS MOBILES

(43) Date of publication of application: 16.05.2007
(73) Proprietor: TELEFONAKTIEBOLAGET LM ERICSSON (publ), 164 83 Stockholm (SE)
(72) Inventor: BOMAN, Krister, S-431 44 Mölndal (SE); TOTH, Stefan, S-414 59 Göteborg (SE); SUNDELL, Hans-Olof, S-430 90 Öckerö (SE); RÖNNEKE, Hans, S-434 34 Kungsbacka (SE); LÖVSEN, Lars, S-413 14 Göteborg (SE)
(74) Representative: Kühn, Friedrich Heinrich
(86) International application number: PCT/EP2004/009629
(87) International publication number: WO 2006/024308

(56) References cited:
- WO-A-03/045100
- WO-A-20/05015934
- "Technical Specification Group Services and System Aspects; Overall high level functionality and architecture impacts of flow based charging; Stage 2 (Release 6)" 3GPP TS 23.125 V.6.1.0, 30 June 2004 (2004-06-30), pages 1-41, XP002332391
- "Technical Specification Group Services and System Aspects; Functional stage 2 description of Location Services (LCS) (Realese 6)" 3GPP TS 23.271, 30 June 2004 (2004-06-30), XP002332392

## Description

### FIELD OF THE INVENTION

The present invention relates to a system for providing a core network node with location related information about one or more mobile user stations accessing the core network over an access network. The invention also relates to a network node for a communications system supporting communication of packet data and also to a core network node for a communication system supporting communication of packet data which acts as a gateway node to external or third party controlled communications systems or service providers. Still further the invention relates to a method for providing a second core network node acting as a gateway to external or third party controlled data communications systems, with location related information of one or more mobile user stations accessing the core network over an access network.

### STATE OF THE ART

In today known systems core network nodes, such as for example GGSNs (Gateway GPRS Support Node), do not have sufficient knowledge of where mobile stations actually are located. It is for example known that GGSNs are provided with location information through so called CGI/SAI (Cell Global Identifier/Service Area Identifier) from for example SGSNs (Serving GPRS Support Nodes). Today CGI/SAI information is sent to a GGSN when a mobile user station (MS), e.g. a User Equipment (UE) is moving from an old SGSN to a new SGSN. Often, however, said information in SGSN/GGSN is not worth so much, since the accuracy is not good due to the fact that a mobile user station may be involved in several handovers at cell level while still being connected to one and the same SGSN, i.e. there may be several handovers at cell level before the SGSN is notified (or there is a change of SGSNs). Thus, in for example PLMNs (Public Land Mobile Network) supporting GPRS services (GSM Packet Radio Service) the precise and actual location of an MS or an UE is not known, neither by the SGSN nor by the GGSN providing the service. The SGSN does have location information, but it only has information that is provided to it, which however has a limited granularity and/or a limited timeliness. The reason therefore is, as referred to above, that the MS/UE may move within a routing area without informing the SGSN. The occasions when the SGSN may report the location of the MS/UE to the GGSN are few, basically at PDP context establishment in the SGSN. Today PLMN operators for example tend to apply Packet Switched (PS) mobile access charging in a GGSN where they apply differentiated rates depending on the service provided. Thus it is a problem with today known solutions among others as far as charging is concerned. An operator who wants to apply different rating, for example depending on the location of an MS/UE, will face the problem that the location information is not available in the GGSN or that it is not accurate or timely enough.

If the Gn interface between the SGSN and the GGSN would be elaborated to report location changes, this would involve several drawbacks. First, such an approach would lead to intensive signalling between the SGSN and GGSN still without any possibility to adapt to the requirements that can be derived from the rating. Moreover the location granularity would be the same for all MSs/UEs and thus the report triggering would be the same for each MS/UE.

For several implementations, for example, relating to charging but also for several other implementations or services the information as to the location or the location at a given time is not sufficient in for example a core network node such as a GGSN and all today known solutions to increase the accuracy etc. of application information all suffer from the drawback that it requires a lot of signalling and all mobile user stations (here meant MSs and/or UEs or, more generally, mobile user stations) are treated completely equally as far as location related information is concerned. An example of such prior art solutions is known from 36 PP TS 23.271 V.6.1.0, 30 June 2004.

### SUMMARY OF THE INVENTION

What is needed is therefore a system as initially referred to in which the provisioning of location related information to core network nodes is provided for in an easy and flexible manner. Particularly a system is needed through which the accuracy of location related information can be increased in core network nodes, particularly in core network nodes acting as gateways to external networks or third party controlled communication systems. Furthermore a system is needed through which different degrees of accuracy of location related information can be provided for different mobile user stations, i.e. that allows controllability.

Moreover a system is needed through which location related information can be provided to core network nodes in a more timely manner than hitherto. Yet further a system is needed through which location related information can be provided to core network nodes without, or at least without considerably, increasing the signalling in the system. Particularly a system is needed through which different kinds of user location related information can be provided to core network nodes and, advantageously also to operators and service providers or users of third party controlled communication systems. Particularly a system is needed through which the accuracy of CGN/SAI in for example an GGSN can be increased. Particularly a system is needed through which location dependent charging is enabled in a better and more flexible party manner than hitherto. Most particularly a system is needed through which packet switched traffic rating which is location dependent on a per mobile station basis is allowed. Particularly a system is needed through which it gets possible to collect location information with the appropriate location (and timing) related accuracy in order to perform for example adaptive charging or rating or adaptively and flexibly providing services.

A (core) network node as initially referred to is also needed through the use of which one or more of the above mentioned objects can be achieved. Still further a core network node acting as a gateway, as also initially referred to, is needed through the use of which one or more of the above mentioned objects can be achieved. Still further a method as initially referred to is needed, through which one or more of the above mentioned objects can be achieved.

Therefore a system as initially referred to is provided which comprises a number of radio access network nodes, such as for example RNCs (Radio Network Controller), BSCs (Base State Controller), BTSs (Base Transceiver Station, Node-B, UNCs (Unlicensed Network Controller), access points or wireless access gateways of for example wireless LANs, a number of first (core) network nodes serving communication of data such as for example SGSNs, MSCs (Mobile Switching Centers), PDGs (Packet Data Gateways) or intermediate interworking gateways to for example a WLAN, a number of second core network nodes comprising gateway core network nodes, for example GGSNs, acting as gateways to external or third party controlled data communication networks and/or service providers, whereby location related information of one or more mobile user stations, for example mobile stations or user equipment, or more generally any mobile user station, obtained from the radio network access nodes, is provided from a first (core) network node to a second core network node. According to the inventive concept, location related information is provided in one or more dedicated information elements added to existing communication of messages between said first (core) network node and said second core network node. The core network may comprise 3G system such as a UMTS or a GPRS/GSM, with an access network such as UTRAN, GERAN with access network nodes, or an Unlicensed Mobile Access Network (UMA).

In one implementation location related information about one or more mobile user stations is provided from radio access network control nodes to the first (core) network node automatically or according to a known procedure. The location related information may also be provided, for one or more user stations, upon request by the first (core) network node, which then may indicate for which particular mobile user station(s) location related information is to be provided and even more particularly when or under which circumstances, e.g. for mobile user stations fulfilling certain criteria.

Particularly, a request from a first (core) network node or some other node can be defined so as to refer to one or more specific mobile user stations. Even more particularly the request can be defined so as to refer to one or more mobile user stations fulfilling one or more given criteria.

Particularly the location related information comprises information about the actual geographical location of a number of mobile user stations on a given level, e.g. cell level, RA (Routing Area) level, sub-cell level or service area level. The location related information may also or additionally comprise information about the time zone in which a mobile user station currently is located, preferably for mobile user stations for which a change of time zone is plausible, i.e. which are located there where change of time zone can be expected to occur. In one particular embodiment the first (core) network node uses the Location Report Control procedure to request location related information of a given mobile user station. However, the location related information may also be requested in other manners.

The dedicated information element or elements is/are, in a most advantageous implementation, added to or included in the user plane traffic messages, i.e. to the payload sent from a first core network to a second core network node for the mobile station or stations concerned, or even all. In another implementation the dedicated information element(s) is/are added the user plane messages concerning such mobile user stations for which the first core node has requested location related information only.

In another embodiment the dedicated information element or elements is/are added to existing messages comprising update PDP context requests or similar from a first (core) network node to a second core network node for all mobile user stations handled by said first core network node or for those mobile user stations only for which the first core network nodes has requested location related information.

Also other existing messaging could be used for adding the information element(s) containing location related information.

In one particular implementation the location related information comprises charging related information such as for example CGI/SAI information. Particularly means are provided for adaptive location information provisioning to a second core network node from the first (core) network node.

Said means particularly comprises a client in the second core network node. Even more particularly said client comprises an LCS (Location Services) Client for requesting and collecting differentiated location related information.

Therefore also a (core) network node as initially referred to is provided which comprises means for establishing for which mobile user stations location related information is to be collected from the access network over which said mobile user stations are connected to said core network, and means for collecting and means for storing said location related information and means for providing location related information to a second core network node acting as a gateway to external or third party controlled communication systems or service providers. Said means for establishing, collecting and providing location related information may consist of common control means, or may be constituted of different, separate, cooperating or intercommunicating means.

Particularly the first (core) network node comprises an SGSN, a node acting as a gateway to a wireless access network, particularly a packet data gateway, PDG, or any other corresponding node.

Even more particularly the node comprises means for providing said location related information in one or more dedicated information elements which may be the same means as the means for providing the location related information to a second core network node, or means separate there from. Said means for providing the location related information particularly comprises means for adding said information element to all payload traffic, i.e. all messages sent on the user plane of the established mobile user stations, e.g. using the GTP-U tunnel. Particularly said information is added to all traffical messages sent from mobile user stations for which the core network node has requested Location Report Control or for which a core network node (or any other node or means) has requested location related information in any other way, or more generally, for which location related information is to be provided.

The core network node even more particularly comprises (control) means, in an alternative embodiment, for adding said information element or elements to messages sent to the second core network node when the location related information has changed for the mobile user station, e.g. when the mobile user station has changed geographical area, service area, cell and/or time zone. Said messages particularly comprise so called Update PDP Context Requests.

The invention also suggests a core network node for a communications system supporting communication of packet data which acts as a gateway node to external or third party controlled communications system or service providers, which comprises means for receiving and collecting location related information for mobile user stations from a first core network node, as discussed above. Said means comprises control means for, based on specified criteria, enabling adaptive collection of location related information for mobile user stations for which the specified criteria are met, and for enabling adaptive reporting of such location related information to external or third party controlled data communications systems or service providers. Said node particularly comprises a GGSN. Said criteria are particularly mobile user station location related, i.e. they may relate to the geographical location of the mobile user station, which then determines whether from that particular user station, where it is located, location related information is needed when it e.g. moves to another cell or to another service area or to another time zone. The collected location related information particularly comprises geographical location information and said control means particularly comprises a LCS client allowing adaptive collection of location related information on a per mobile user station basis. Particularly means are provided for transferring said location related information to a GMLC (Gateway Mobile Location Center). It may however be any kind of node or center having a functionality similar to that of a gateway mobile location center. Particularly means are provided for transferring said location related information to a GMLC allowing for, for example, adaptive location based service provisioning or adaptive location based charging.

Converting means for converting collected location related information to another format, particularly to a format understandable to the third party controlled data communication system or service provider may be provided in the first (core) network node, in the second core network node, e.g. a GGSN, according to different implementations.

The invention therefore also discloses a method as initially referred to, which comprises the steps of; establishing at least for which user stations location related information is to be collected in a first (core) network node; collecting said location information for said mobile user stations; storing said location related information in storing means in or associated with said first (core) network node; arranging said location related information in dedicated information elements; and adding said information elements to messages sent independently of said information element(s) from said first (core) network node to the second core network node. That the messages are sent independently of said information element means that already existing messaging between first core network node and the second core network node is used for transfer of said information element(s). The dedicated information element may be added to all traffical packets sent in the user plane for the concerned mobile user stations or it may alternatively be added to other messages, e.g. in the control plane, such as Update PDP Context Requests. In an advantageous implementation it additionally comprises the step of converting, in said first or said second core network node, said location related information to a format understandable to users of said third party controlled data communications network or external service providers or more general to any desired format unless it is already in a desired format.

Most particularly the method comprises the step of; adaptively reporting location related information such as location information, time zone information etc. to allow for location dependent rating or service provisioning on a per mobile user station basis. The location information may be on different levels, e.g. on cell level, service area level or any other appropriate level. It may particularly comprise geographical coordinates or it may be converted to such. The location information may also alternatively or additionally comprise time zone information.

### BRIEF DESCRIPTION OF THE DRAWINGS

The invention will in the following be further described, in a non-limiting manner, and with reference to the accompanying drawings, in which:
- Fig. 1: is a schematical block diagram of a part of an UMTS or GSM/GPRS architecture in which location related information is provided to a GGSN according to a first implementation of the inventive concept,
- Fig. 2: is a figure similar to Fig. 1 illustrating provisioning of location related information according to a second implementation of the inventive concept,
- Fig. 3: is a schematical block diagram of a system in which the access network comprises an unlicensed mobile access network and to which the inventive concept can be implemented,
- Fig. 4: is a schematical block diagram of a system in which the access network comprises a WLAN,
- Fig. 5: is a schematical block diagram of a system of an alternative implementation in which the access network comprises a WLAN,
- Fig. 6: illustrates a traffical packet with the dedicated information element for provisioning of the location related information to a GGSN according to one embodiment of the invention,
- Fig. 7: is a sequence diagram illustrating the inter SGSN routing area update procedure as adapted for location related information provisioning according to another embodiment of the invention,
- Fig. 8: illustrates an example of a user location information element, indicating CGI/SAI, that can be used,
- Fig. 9: illustrates geographic location type values and the meanings thereof for an embodiment using a location information element as in Fig. 8,
- Fig. 10: illustrates geographic location fields for CGI for the Fig. 8 embodiment according to one implementation,
- Fig. 11: illustrates an example of a geographic location field for SAI for the embodiment of Fig 8 according to one implementation,
- Fig. 12A: illustrates one example on a location related information element comprising an MS time zone element,
- Fig. 12B: illustrates possible values for the daylight saving time field and the meaning thereof,
- Fig. 13: illustrates an embodiment in which an LCS client is introduced in GGSN,
- Fig. 14: schematically illustrates a part of a communication system with an LCS client in GGSN,
- Fig. 15: shows an LCS architecture with an LCS client in a GGSN,
- Fig. 16: is a schematical flow diagram showing location related information provisioning to a GGSN according to one exemplary embodiment, and
- Fig. 17: is a sequence diagram illustrating flow based charging in GGSN with differentiated rating depending on location.

### DETAILED DESCRIPTION OF THE INVENTION

The present invention generally relates to providing a core network node, generally denoted a second network core (CN) node, particularly a GGSN, with location related information for one or more mobile user stations, e.g. mobile user stations for which location related information has been requested, for all mobile user stations or for mobile user stations fulfilling one or more given criteria e.g. as far as location is concerned. The location related information can be of different kinds as will be more thoroughly discussed below, for example pure location information, e.g. indicating geographical area, on different levels or in different forms, for example on cell level, service area level or geographical coordinates or any other form to specify an area, but it may also comprise information about in which time zone a mobile user station currently is located. It may also be different or on different levels etc. for different mobile user stations. The inventive concept is applicable to 3G (Third Generation Partnership Project) systems, e.g. UMTS based on WCDMA (Wideband Code Division Multiple Access) technologies as well as to other systems and to other access networks, for example WLAN (Wireless Local Area Network) inter working with 3G and Unlicensed Mobile Access (UMA) etc.

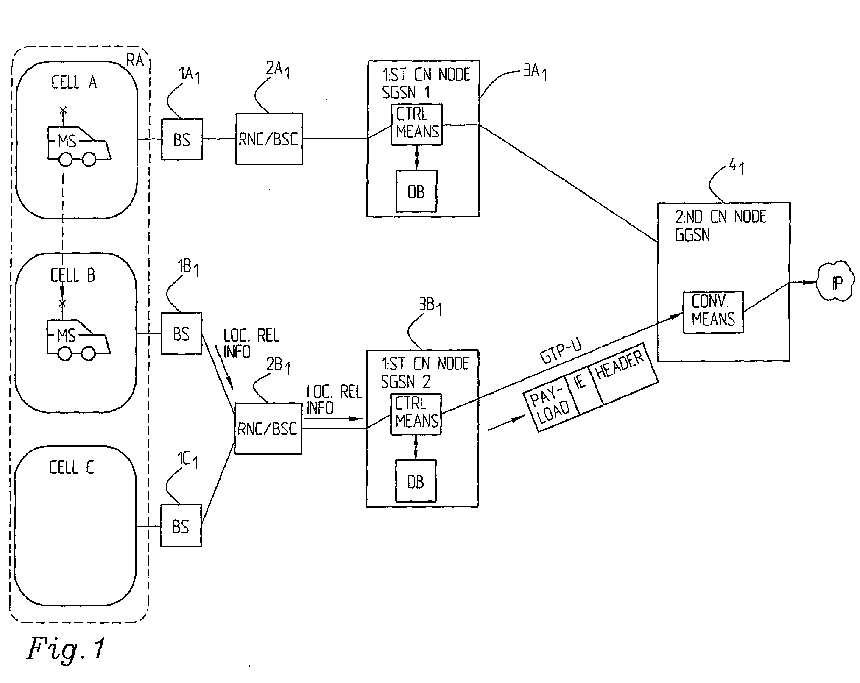

Fig. 1 is a schematical block diagram of a first example of an implementation to a 3G UMTS system built on the WCDMA technology architecture. In a simplified manner is illustrated a routing area RA comprising three cells, cell A, cell B, cell C in which a mobile user station or a user equipment MS is moving around, in this particular case it is supposed that it moves from cell A to cell B. Cell A is here via a base station BS 1A₁, controlled by RNC (Radio Network Controller) or BSC (Base Station Controller) 2A₁ whereas cell B via base station BS 1B₁ and cell C via base station BS 1C₁ are controlled by RNC/BSC 2B₁. RNC/BSC 2A₁ here connects to the core network by means of first CN node SGSN 1 3A₁, whereas RNC/BSC 2B₁ is connected to first CN node SGSN 2 3B₁. Both SGSN 1 3A₁ and SGSN 2 3B₁ communicate with second CN node GGSN (Gateway GPRS Support Node) 4₁. It should be clear that this is merely a simplified illustration and the inventive concept is also among other applicable to pooling concepts.

It is in this embodiment supposed that MS moves from cell A to cell B. It is in this particular case supposed that the SGSN has requested that location related information be provided for MS. When MS moves from cell A to cell B, information as to that is provided from BS 1B₁ to RNC/BSC 2B₁, which hereupon provides such location related information to SGSN 2 3B₁. In Figure 1 control means are illustrated in SGSN 1 and SGSN 2 respectively which here are supposed to handle establishment of for which mobile stations location related information should be provided and to handle collection of such information from the RNC/BSC in question and further to provide for storing of such location related information in a database DB, for example an existing database in the SGSN holding location information for all subscribers, e.g. the MM context data database (Mobility Management database) or in a specific database or a database associated with SGSN. The control means are also responsible for making sure that the location related information is provided to GGSN, i.e. the relevant location related information is thus fetched from the database when sending of a message (e.g. a traffical packet in the user plane) to SGSN is due. In the particular embodiment illustrated in Fig. 1, it is supposed that the control means also are responsible for providing the location related information in a new (dedicated) information element (IE) which is sent in the User Plane, i.e. over GTP-U (GPRS Tunneling Protocol-User plane). The relevant information element(s) is/are thus added to traffic payload sent from MS via SGSN 2 to GGSN and hence added to all messages for the particular user, in this case MS. The SGSN control means are used to add the dedicated information element(s) to all messages particularly by extending the GPP-U header with the location related information. In an alternative, advantageous, implementation only one (or a limited number of) GTP-U packet is extended with location information each time the UE changes e.g. cell or RA. This is advantageous in that it eliminates redundant information sent to GGSN and in that it minimizes processing time in GGSN to handle the embedded location information in the GTP-U packet. Even if there is a slight risk that a single GTP-U packet gets lost, the benefit should outweigh this risk.

In Fig. 1 it is further illustrated that converting means are provided in GGSN 4₁. The converting means are used to convert the location related information of the dedicated information element IE to a format understandable to a third party communication system connected to GGSN, for example Internet, or to external service providers etc. These converting means are not necessary for the functioning of the inventive concept but generally it is desirable to be able to provide the location related information in an appropriate form to allow for example for service providers to offer services etc. The converting means could also have been provided in SGSN 2 (and SGSN 1). When the interface between RNC/BSC and SGSN in Iu (i.e. not Gb), GTP-U may be used to convey the location information in the same manner as on the Gn-interface. When using GTP-U the GGSN will only receive updates of location of UEs when they are active. That is, when the user is using some PS based service. Many times when a user is moving, he is not using any PS service at all, and hence the GGSN will fail to be updated. This problem can be solved in for example the following way: Every time an SGSN or RNC/BSC becomes aware that a UE has changed Cell (or RA), it updates its DB with the new location and searches for any GTP-U communication of the UE to convey its location to the next CN node. If no GTP-U communication (packets) are found within a certain time (a timer T1 may e.g. be set), the node generates a GTP-U packet itself "on behalf of" the UE and forwards this to the next CN node. The location information is inserted in this generated GTP-U packet. The IP packet which is encapsulated in the GTP-U packet may be constructed in such a way that it is discarded by the GGSN. It may for example be a PING message which GGSN will not answer, or with a faulty destination address e.g. 0.0.0.0 that the GGSN will have to discard. This generated "dummy" packet will convey the location information to the GGSN at a very low cost, and still use the same concept as if GTP-U communication is present.

The timer can be set to a reasonable high value, e.g. minutes, to avoid frequent updates e.g. for UEs which are moving fast on a highway and quickly moving between cells. Depending on how the location information is used by receiving applications, UEs only staying a very short time in a cell may not be of interest. The timer T1 could hence be reset every time the UE moves to a new cell or RA.

It should be clear that in this embodiment the information element could alternatively have been included in an Update PDP Context Request as sent from SGSN 2 to GGSN 4₁ for example whenever MS changes the geographical area, which is detected via SGSN which then sends the updated location related information to GGSN in a new information element added to an Update PDP Context Request instead. However, the first solution relating to sending information elements in the user plane minimizes the amount of signalling which is extremely advantageous.

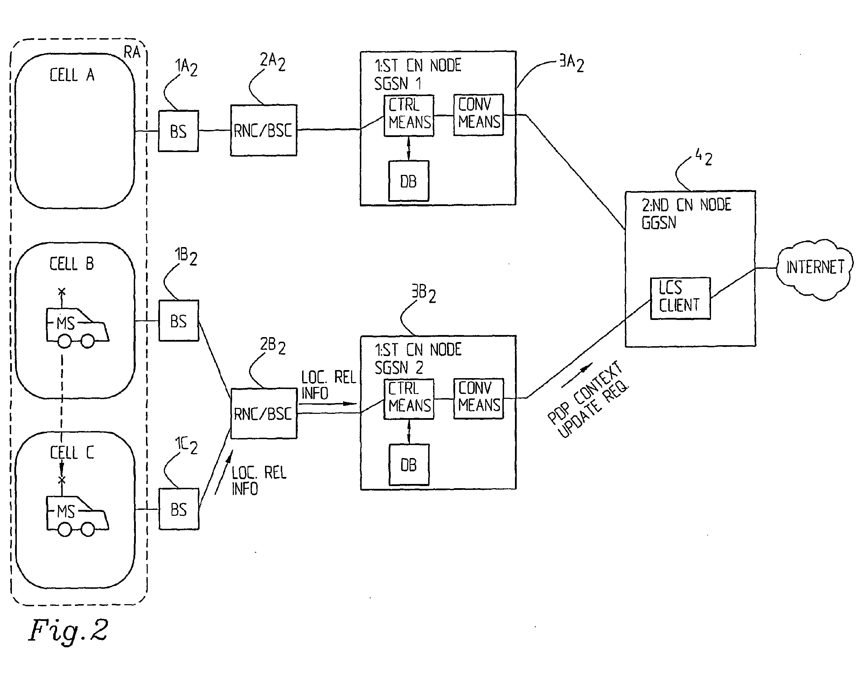

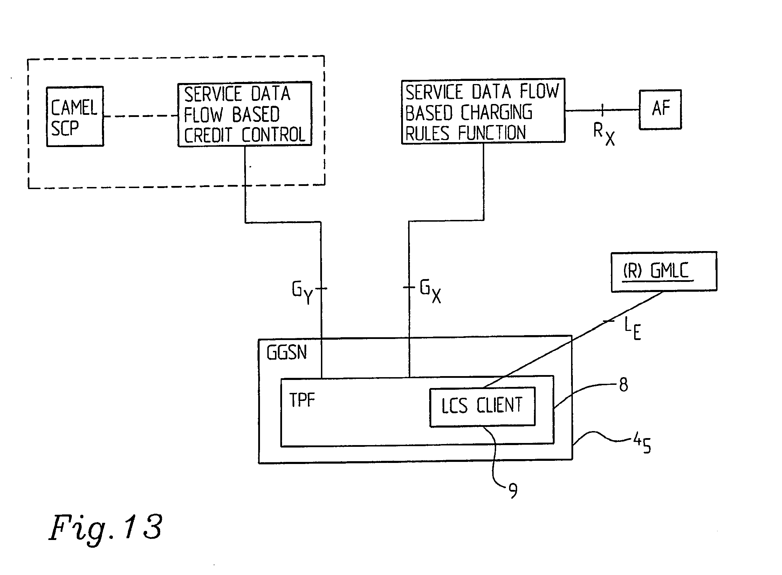

Fig. 2 shows another implementation of the inventive concept. It is also here supposed that routing area RA comprises three cells, cell A, cell B, cell C. Here mobile user station MS moves from cell B to cell C and BS 1A₂ covers cell A, BS 1B₂ covers cell B, whereas BS 1C₂ covers cell C. BS 1A₂ is controlled by RNC/BSC 2A₂ whereas BSs 1B₂, 1C₂ are controlled by RNC/BSC 2B₂. RNC/BSC 2A₂ is here connected to first CN node SGSN 1 3A₂ whereas RNC/BSC 2B₂ is connected to first CN node SGSN 2 3B₂. SGSN 1 and SGSN 2 communicate with GGSN 4₂, i.e. the second CN node. Like in the preceding embodiment, described with reference to Fig. 1, it is supposed that the first CN nodes SGSN 1 and SGSN 2 comprise control means and a database respectively. However, in this embodiment it is illustrated that converting means are provided in SGSN 1 and SGSN 2 respectively. In this particular implementation it is also supposed that GGSN 4₂ comprises an LCS client (Location Services). The LCS client particularly allows collection of location information required for e.g. rating to be properly differentiated based on location. The LCS client is defined in 3GPP TS 23.271, section 6.3.2. The LCS client can also be responsible for collecting location related information in the form of time zone information etc. The inclusion of an LCS client is however not necessary for the basic concept of the present invention but it merely discloses an advantageous implementation, (and requires a GMLC as will be explained below). Moreover, an LCS client as will be more thoroughly described below with reference to figures 13, 14 and 15 might alternatively be included in a GGSN without the implementation of the dedicated information element sent using already existing messaging for provisioning of location related information to a GGSN, i.e. relying on the GMLC (cf. e.g. Figs. 13-15).

As referred to with reference to Fig. 1 also the converting means are not necessary for the functioning of the inventive concept, but if such are provided, they may, as in Fig. 1, be included in the GGSN instead.

Thus, in Fig. 2 it is supposed that BS 1C₂ provides location related information to RNC/BSC 2B₂ which in turn forwards said location related information concerning MS to the control means of SGSN 2 3B₂, which for example explicitly may have requested location related information for MS. In other aspects the functioning is similar to that described with reference to Fig. 1 and SGSN 2 provides the location related information to, here, the LCS client of GGSN 4₂. Also without inclusion of this LCS client in GGSN, the location related information would of course be provided to GGSN 4₂. This transfer is via GMLC, which provides the information to the LCS client in the GGSN. The GMLC may process and/or convert the location information as required to meet the demands from the LCS client's client (e.g. the charging framework). The GMLC may use the SGSN or MSC to collect location information, and uses the options of the Lg interface to optimize the data collection. The GMLC may even collect GPS data from an MS that supports GPS positioning. In the illustrated embodiment a PDP Context Update Request is used as existing messaging, and to which a dedicated information element is added as discussed with reference to Fig. 1. Of course, alternatively the information element might have been added to the user (traffic) plane messages, i.e. the user packets from MS.

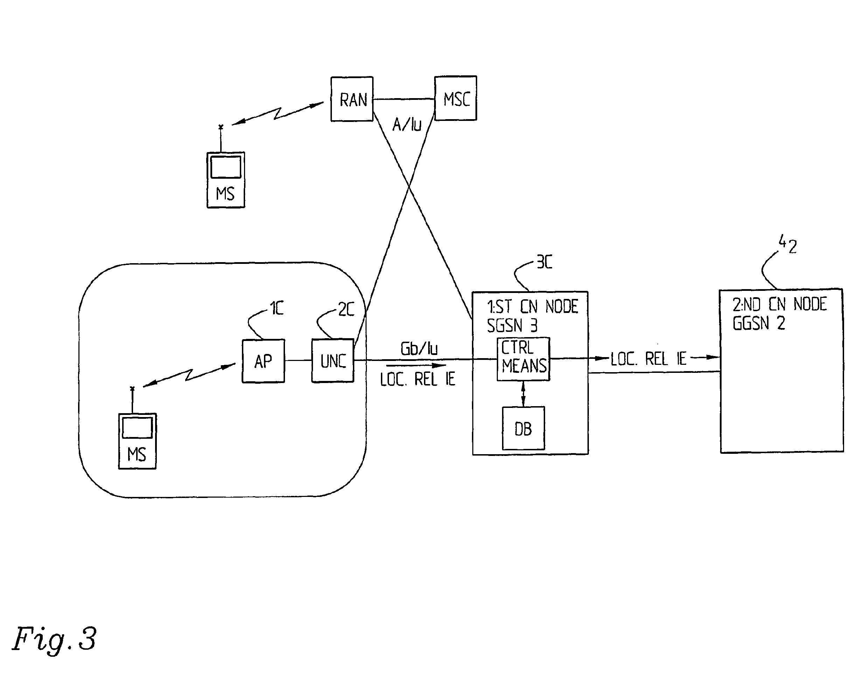

Fig. 3 shows an embodiment in which the inventive concept is used in a system with an Unlicensed Mobile Access network (UMA). The functioning is similar to that described above with the reference to the Figs. 1 and 2 with the difference that the access network comprises an UMA with an access point 1C controlled by an Unlicensed Network Controller UNC 2C which functions substantially in the same manner as an RNC. The UNC 2C communicates with a first CN node SGSN 3 3C over the Gb/Iu interface and here with an MSC over the A/Iu interface. The MSC in turn communicates with a RAN for circuit switched communication. Also RAN communicates with the first CN node SGSN 3 3C. As the MS moves, location related information is provided to the control means of SGSN 3 3C as described with reference to for example Figs. 1 and 2. SGSN 3 3C stores the location related information in a database DB for forwarding to the second core node GGSN 1 4₂ in a dedicated information element IE. It is of course also here possible to either extend the traffic payload messages with the location related information dedicated information element in all traffical packets from the MS for which location related information should be provided to e.g. GGSN 1 4₂ or alternatively to add one or more dedicated information elements to Update PDP Context Requests. Assuming that the Gb/Iu or A/Iu supports location based services (LCS), i.e. having an LCS client in the GGSN, is possible here as well. In order to indicate that both methods can be used, the transfer to GGSN 1 4₂ merely is indicated as location related IE in the figure. In other aspects the functioning is similar to that described above. Converting means may optionally be provided in SGSN 3 3C or GGSN 2 4₂.

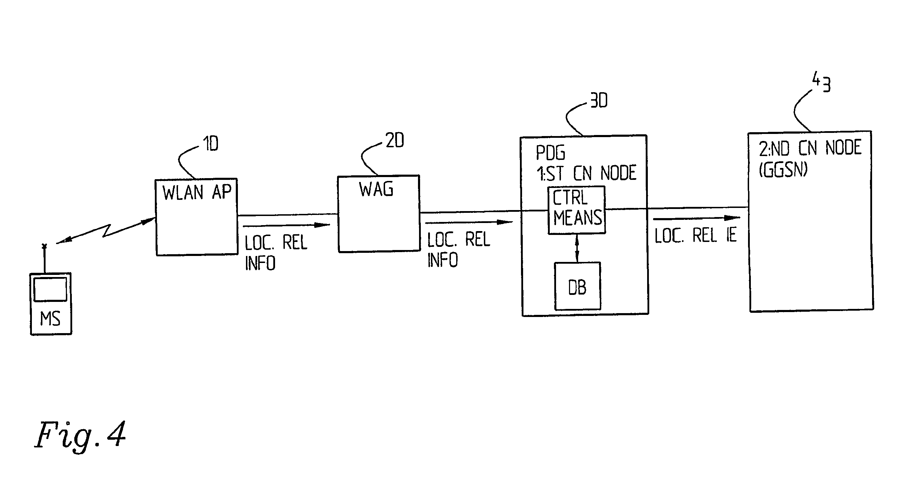

Fig. 4 describes still another an embodiment in which the inventive concept is implemented in a system or an architecture in which a WLAN interworks with a 3G system. In this embodiment it is illustrated how location related information about an MS is provided from a WLAN AP 1D to a wireless local area network access gateway WAG 2D which forwards the information to a packet data gateway PDG 3D which, even if it actually does not belong to the core network, here is referred to as a first (CN) node, similar to an SGSN, which therefore contains the control means and the database as discussed above according to Figs. 1-3 with reference to SGSNs. The PDG then transfers the location related dedicated IEs to the second CN node GGSN 4₃. Also in this case the dedicated information element or elements IE could be added to all traffical packets from the concerned MS, or the dedicated IE could be added to PDP Context Update Requests from PDG 3D to GGSN 4₃. Converting means (not shown) may optionally be included in PDG 3D and/or GGSN 4₃.

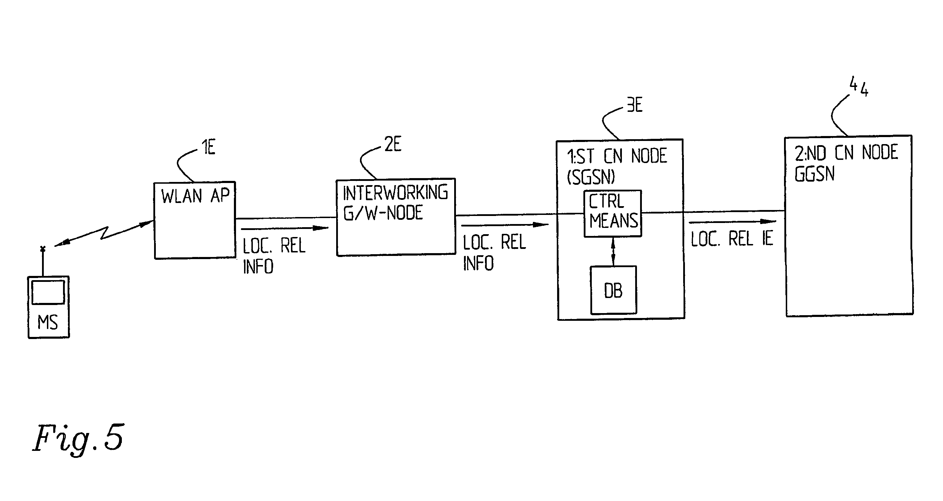

Fig. 5 shows still another example of an implementation in which a WLAN interworks with a 3G system. In this case, however, it is supposed that an interworking gateway node 2E communicates with an SGSN, a first CN node 3E with control means and database as discussed above which thus forwards location related information either in the user plane included in all traffical packets from MS or as an additional information element added to an Update PDP Context Request sent from SGSN 3E to GGSN 4₄. The location related information about the MS is thus forwarded from WLAN AP 1E to the interworking gateway node 2E. In all the embodiments described with reference to Figs. 3-5, any converting means could optionally be provided either in SGSN or PDG or in GGSN.

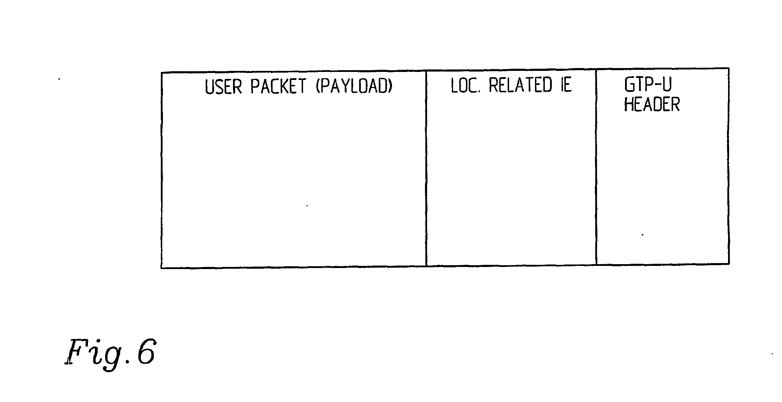

Fig. 6 shows a dedicated location related information element IE according to the invention to be sent in the user plane, i.e. over GTP-U. This means that an SGSN (or a PDG or similar) includes this information for all messages towards a GGSN from a particular user if the SGSN has requested the provisioning of location related information as far as that user is concerned, particularly if the SGSN has requested location reporting control for that user. In an alternative embodiment it could be done for all users. More generally it can be controlled in any manner for which users reporting should apply and SGSN does not necessarily have to explicitly request information. Requests could also originate from other nodes or external means etc., or it can be seen as a request if an MS fulfills some predefined criteria, i.e. is located in an area, in which provisioning of location related information is wanted for whatever reason.

This means that SGSN to the GTP-U header adds an extension header including e.g. user location, particularly a new CGI information element in all (or one or a limited number only) user plane packets towards the GGSN in one particular embodiment. This gives GGSN accurate location information since particularly, according to one embodiment every cell change will be visible to the GGSN, in case location information is requested on cell level. It should be clear that different kinds of location related information can be requested and provided to GGSN, on different levels, in different forms or for example as time zone information. This method enables very high accuracy and minimizes the signalling load as compared to the alternative in which dedicated information elements are added to Update PDP Context Requests.

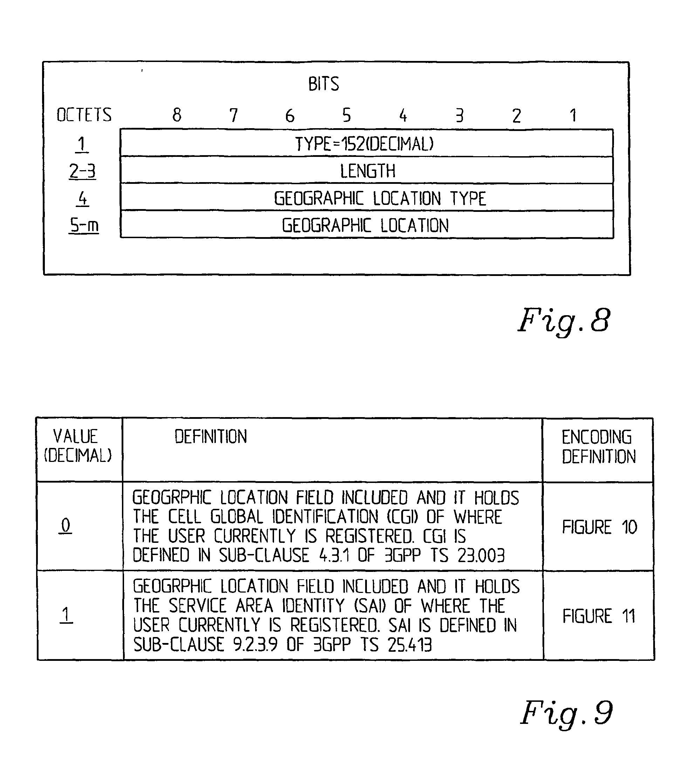

Packets from an MS in the direction towards the external network are hence encapsulated and tunneled from the SGSN to the GGSN by the GPRS Tunnelling protocol GTP. In this particular embodiment an extension header, including a new, also called dedicated, information element, which in one implementation is a so called CGI information element, is added to the GTP header. This is done in the user plane, GTP-U, and hence the SGSN includes the location related information in all packets towards the GGSN as mentioned above. As can see from the figure a GTP-U packet comprises a GTP-U header as is conventional, but in addition thereto it is provided with an extension header including for example a user location information element. In a more particular embodiment it may also comprise an MS time zone information element. The packet also comprises the user payload, i.e. the user packet coming from the MS. Examples on user location information elements and time zone information elements will be given with reference to Figs. 8,9,10,11,12A,12B. Of course also other types of information elements are possible, there might be more information elements and the structure may be different and therefore these examples should not be seen in a limitative perspective.

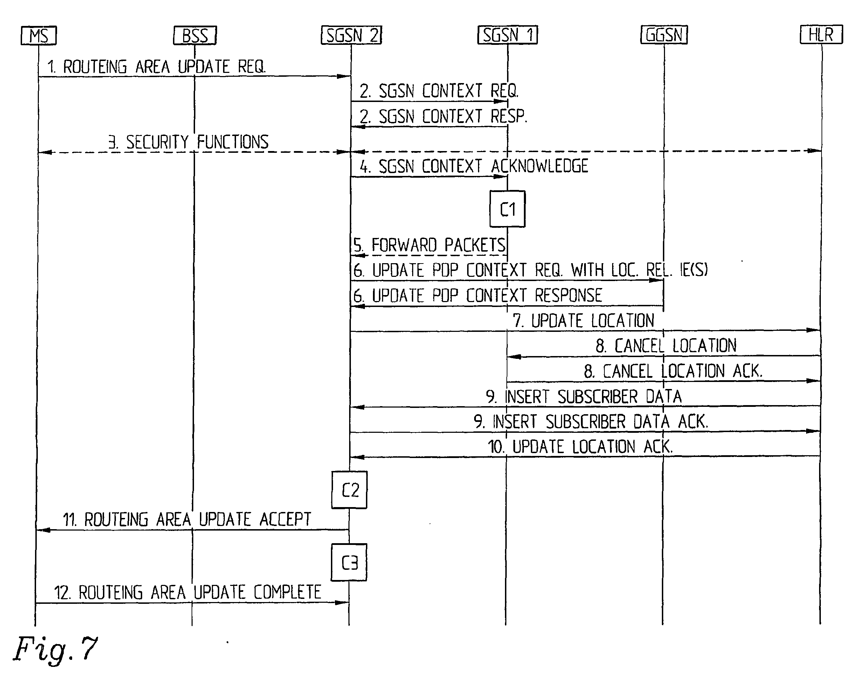

Fig. 7 is a sequence diagram illustrating an embodiment in which the dedicated information element is added to an Update PDP Context Request. Whenever, for example, a mobile station or a user equipment (UE) has changed geographical area, this will be detected by the SGSN (or PDG) which sends the updated coordinates to the GGSN in a dedicated (new) information element which is added to an Update PDP Context Request. the Inter SGSN Routing Area Update procedure is described in 3GPP TS 23.060, ch. 6.9.1.2.2. In the sequence diagram of Fig. 7, the dedicated information element, particularly a CGI information element, is added to the Update PDP Context Request message 6 sent from SGSN 2 to GGSN. In other aspects the signalling sequence is similar to that described in the above mentioned standard.

Thus, it is supposed that an MS sends a Routing Area Update Request to a new, here called a second SGSN 2, 1. SGSN 2 subsequently sends an SGSN Context Request to the old SGSN 1 to get MM (Mobility Management) and PDP Contexts for the MS, 2. SGSN 1 responds with an SGSN Context Response to SGSN 2, 2. Optionally security functions may be executed, 3. SGSN 2 then sends a SGSN Context Acknowledgement message to SGSN 1. This message informs the first SGSN 1 that the second SGSN 2 is ready to receive data packets belonging to the activated PDP Context, 4.

SGSN 1 duplicates buffered N-PDUs (Packet Data Units) and starts tunnelling them to SGSN 2, 5. SGSN 2 then sends an Update PDP Context Request with the new SGSN address, (address of SGSN 2) TEID, QoS negotiated, and user location related information of any kind, for example also including mobile station time zone, to the concerned GGSN. The GGSNs then update PDP Context Fields and return Update PDP Context Response to SGSN 2. The location related information provides information for example about the geographical location of a mobile station. It may also (or only) include time zone information as to in which time zone the mobile station currently resides, 6. Subsequently SGSN 2 informs the HLR about the SGSN change by sending update location to HLR, 7, and HLR sends a cancel location to SGSN 1, 8. The HLR then sends Insert Subscriber Data (IMSI International Mobile Subscriber Identity etc.) to SGSN 2 which validates the presence of the MS in the (new) RA etc., 9. The HLR subsequently acknowledges the Update Location by sending an Update Location Acknowledgement (IMSI) to SGSN 2, 10. Subsequently SGSN 2 validates the presence of the MS in the new RA, 11, and the MS acknowledges a new P-TMSI by returning a Routeing Area Update complete message to SGSN 2.

In the case of a rejected routing area update operation, due to regional subscription or roaming restrictions, or because the SGSN cannot determine the HLR address to establish the locating updating dialogue, the new SGSN shall not construct an MM context. A reject shall be returned to the MS with an appropriate cause. The MS does no re-attempt a routeing area update to that RA. The RAI value shall be deleted when the MS is powered up. If the new SGSN is unable to update the PDP context in one or more GGSNs, the new SGSN shall deactivate the corresponding PDP contexts. This shall not cause the SGSN to reject the routing area update. The PDP Contexts shall be sent from old (second) to new (first) SGSN in a prioritized order, i.e. the most important PDP Context first in the SGSN Context Response message. (The prioritization method is implementation dependent, but should be based on the current activity). If the new SGSN is unable to support the same number of active PDP contexts as received from old (first) SGSN, the new (second) SGSN should use the prioritization sent by old SGSN as input when deciding which PDP contexts to maintain active and which ones to delete. In any case, the new SGSN shall first update all contexts in one or more GGSNs and then deactivate the context(s) that it cannot maintain. This shall not cause the SGSN to reject the routing area update. If a timer used in step 2 expires and no Cancel Location (IMSI) was received from the HLR, the old (first) SGSN stops forwarding N-PDUs to the new (second) SGSN. If the routing area update procedure fails a maximum allowable number of times, or if the SGSN returns a Routing Area Update Reject (Cause) message, the MS shall enter IDLE state. The CAMEL procedure calls shall be performed, see referenced procedures in 3GPP TS 23.078:

### C1) CAMEL_GPRS_PDP_Context_Disconnection, CAMEL_GPRS_Detach and CAMEL_PS_Notification.

They are called in the following order:
- The CAMEL_GPRS_PDP_Context_Disconnection procedure is called several times: once per PDP context. The procedure returns as result "Continue".
- Then the CAMEL_GPRS_Detach procedure is called once. The procedure returns as result "Continue".
- Then the CAMEL_PS_Notification procedure is called once. The procedure return as result "Continue".

### C2) CAMEL_GPRS_Routing_Area_Update_Session and CAMEL_PS_ Notification.

They are called in the following order:
- The CAMEL_GPRS_Routing_Area_Update_Session procedure is called. The procedure returns as result "Continue".
- Then the CAMEL_PS_Notification procedure is called. The procedure returns as result "Continue".

### C3) CAMEL_GPRS__Routing_Area_Update_Context.

This procedure is called several times: once per PDP context. It returns as result "Continue".

Figs. 8,9,10,11 give examples on how a dedicated information element or user location information can be defined. As referred to above the SGSN or for example a PDG provides this information to GGSN. Fig. 8 particularly describes the user location information IE which in this case is used to indicate CGI/SAI (Cell Global Identifier/Service Area Identifier) of where the MS currently is located. The "Geographic Location Type" field is used to convey whether or not location field is included, and if so, what type of location. The types of locations that can be conveyed in this particular implementation are defined in Fig. 9 which shows a table with the geographic location type values and their meanings.

The "Geographic Location" field is used to convey the actual geographic information as indicated in the "Geographic Location Type" field. This field shall not be present if the value of the "Geographic Location Type" field is 0. In the table of Fig. 9 is referred to 3GPP TS 23.003, sub-clause 4.3.1 and 3GPP TS 25.413, sub-clause 9.2.3.9.

The location information is generally only of interest for the end point nodes and intermediate nodes need not be able to comprehend the location information. The GTP header is a header of variable length used for GTP-C (Control Plane) and GTP-U (User Plane) protocols. It among others comprises an always present field, Extension Header Flag, indicating the presence of a meaningful value of the Next Extension Header Field. According to this embodiment of the present invention bits 8,7 of the Next Extension Header Type might be set to 1 0, indicating that comprehension of this extension header is required by the End Point Receiver but not by Intermediate Nodes, which are supposed to forward the whole field to the End Point. Alternatively it might be 0 0, indicating that comprehension is not required. Other alternatives are also possible. This is described in 3GPP TS 29.060 v. 6.5.0. However, it should be clear that also entirely different implementations are possible.

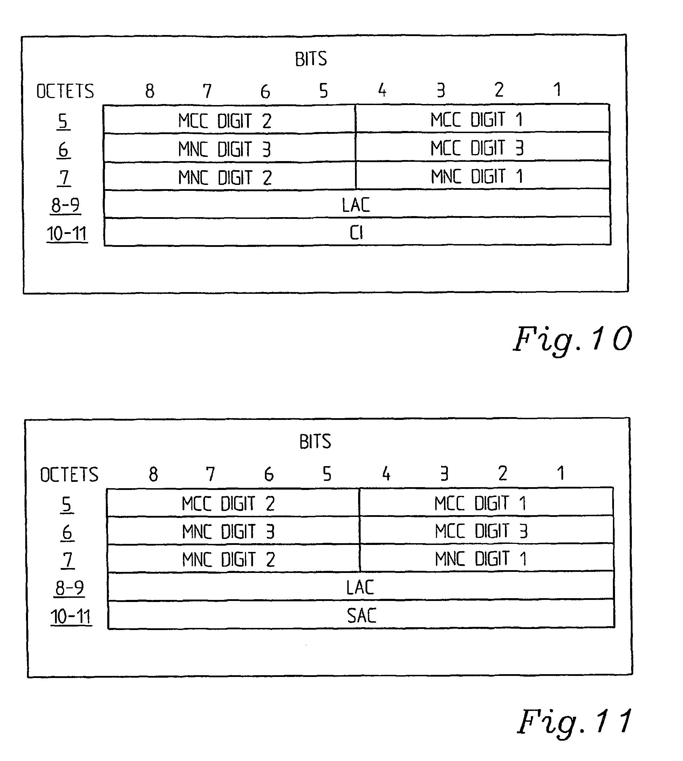

Fig. 10 illustrates the geographic location field for CGI. If only two digits are included in the MNC, then bits 5 to 8 of octet 6 are coded as "1111". The location area code consists of 2 octets and is found in octet 8 and octet 9. Bit 8 of octet 8 is the most significant bit and bit 1 of octet 9 the least significant bit. The coding of the location area code is their responsibility of each administration. Coding using full hexadecimal representation shall be used. The cell identity consists of two octets and is found in octet 10 and octet 11. Bit 8 of octet 10 is the most significant bit and bit 1 of octet 11 the least significant bit. The coding of the cell identity is the responsibility of each administration. Preferably full hexadecimal representation is used.

Fig. 11 finally describes as a table describing the geographic location field for SAI.

If only two digits are included in the MNC, then bits 5-8 of octet 6 are coded as "1111". The location area code consists of two octets and it is found in octet 8 and octet 9. Bit 8 of octet 8 is the most significant bit, and bit 1 of octet 9 is the least significant bit. The coding of the location area should be the responsibility of a respective administration. Again coding using full hexadecimal representation should be used, cf. 3GPP TS 24.008.

The service area code consists of 2 octets and it is found in octets 10 and 11. Bit 8 of octet 10 is the most significant whereas bit 1 of octet 11 is the least significant bit. SAC is operator defined, cf. 3GPP TS 23.003 section 12.5.

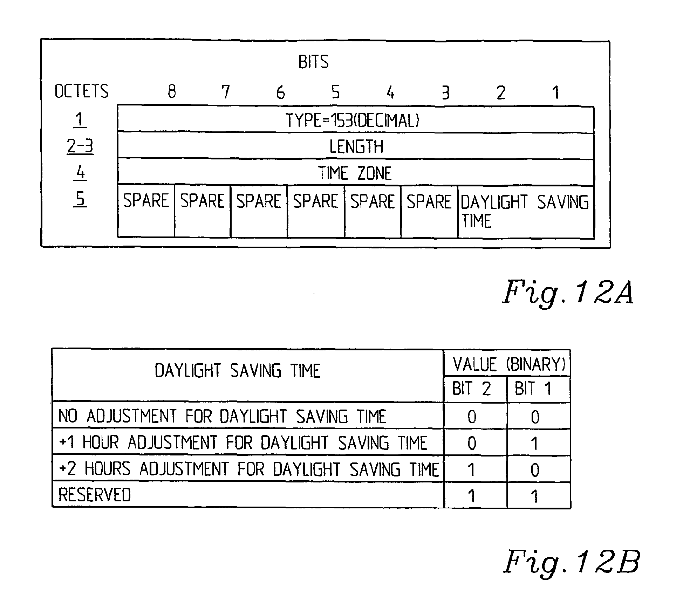

As referred to above the time zone information element may additionally or alternatively be included, or together with any other location related information; any combination is in principle possible. The time zone information element can with advantage be used together with the location information to offer better and more accurate charging and location based services. The MS time zone information element is used to indicate the offset between universal time and local time in the steps of 15 minutes of where the MS currently resides. The time zone field in one embodiment uses the same form at as the time zone information element discussed above with reference to Fig. 8, cf. 3GPP TS 24.008, and it is shown in Fig. 12A.

Fig. 12B gives an example on possible values for the daylight saving time field and meanings thereof. It should be clear that the examples an location related information elements and time zone elements merely are given for exemplary reasons, and the invention is by no means limited to the use of these specific elements.

With the location information and the time zone information in the GGSN, more accurate charging based on location and time of day gets possible. It also gives a network operator or an external service provider provided with this information, the opportunity to develop location based applications, particularly with a better accuracy which adds value for the operators as well as for the customers of the operator.

Fig. 13 shows a particular embodiment allowing for example operators to apply different rating depending on the location of a MS/UE while the appropriate location information is available in the GGSN and, in addition thereto, in a timely manner. According to the shown solution location reporting granularity can be different for different MSs/UEs as well as the triggering of recording can be different.

This is for example advantageous if there is a "free of charge" rating in one cell, whereas a common rating applies in all other locations. The location tracking then does not need to be so accurate when the MS/UE is located outside that particular routing area which contains the "free of charge cell". According to the embodiment discussed with reference to Figs. 13-15, e.g. Flow Based Rating in GGSN is extended with differentiated rating (or other service provisioning) depending on location. The characteristics of the different areas (routing areas, service areas, cells etc.) may result in different needs for the collection of location information i.e. on which level (service area level, RA level, cell level etc.) and/or on frequency or timing for collecting the information.

3GPP TS 23.271 (with particular reference to section 6.3.2.) specifies a Location Services (LCS). According to the present invention such an LCS client 9 is introduced in GGSN 4₅. This provides for the possibility to collect location related information, particularly over the Le interface, which is adapted to the actual needs e.g. for rating purposes, most particularly on a per MS/UE basis. Thus, the inclusion of the LCS client 9 in GGSN 4₅ allows for collection of location related information in a manner appropriate for rating to be properly differentiated based on location. Both the accuracy and frequency for the data collection can be adapted to the needs for rating. It is sufficient if either the CS or PS access network supports LCS in order to make use of this alternative. The architecture for Flow Based Charging is defined in 3GPP TS 23.125.

The architecture according to the invention comprises an LCS client 9 in the Traffic Plane Function TPF 8 in GGSN 4₅ for collection of location information, particularly for rating purposes. The LCS client 9 in the TPF 8 subscribes to location information from the GMLC when the tariff for a user, according to Flow Based Charging, depends on the location of the mobile user station, e.g. the UE. In an advantageous embodiment the standardized Le interface Le/LIF-MLP as specified by 3GPP Rel. 6, 29.198 is used towards the GMLC.

In a particular implementation the LCS client issues a Location Deferred Request with event triggers for a mobile user station entering/leaving/camping in interesting areas. Examples on such event triggers are PLMN id, coutry code, time zone or other location related events. The time zone trigger is particularly an extension to Le. In other implementations, or additionally, other pre-defined trigger schemes or trigger events may be developed and implemented in the GMLC on a per need basis.

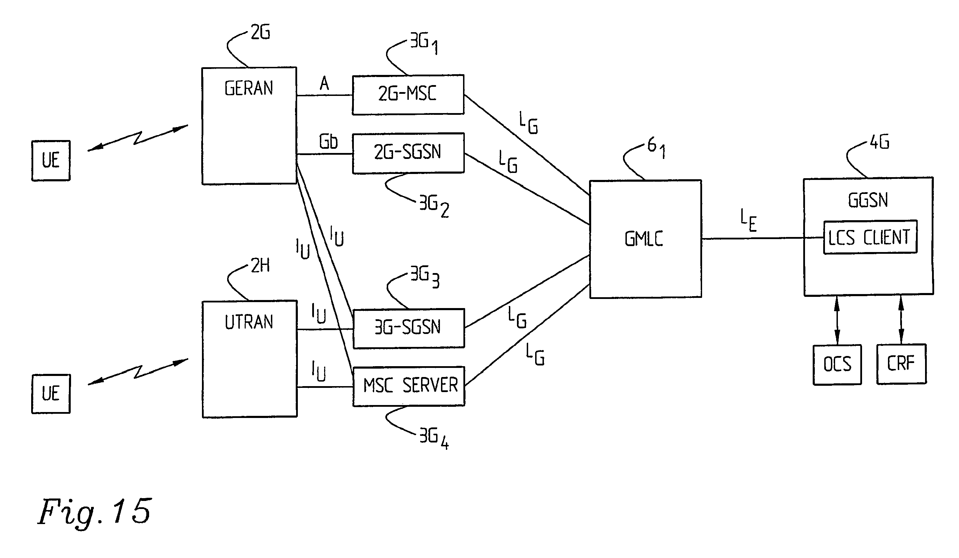

In advantageous implementations the LCS client 9 includes optimizations, such that location related information is collected only for subscribers with e.g. a rating depending on the location of the mobile user station location, and/or the accuracy and a timing of the location related information is adapted to the need for performing rating (or providing some kind of services). Examples hereon are when a mobile user station roams to another operator there is a single rate that differs from the HPLMN rate, which does not require exact location information, it is e.g. sufficient with MLC/MNC. Another example relates to the case when there e.g. is a low rate when the mobile user station is located in the "home cell", but otherwise a higher rate. Then accurate location information is collected in that routing area (RA) where the "home cell" is located. At other locations, or in other RAs in the HPLMN merely a tracking of RA changes is necessitated or sufficient. The GMLC collects location information from SGSN and/or MSC, cf. Fig. 15 below.

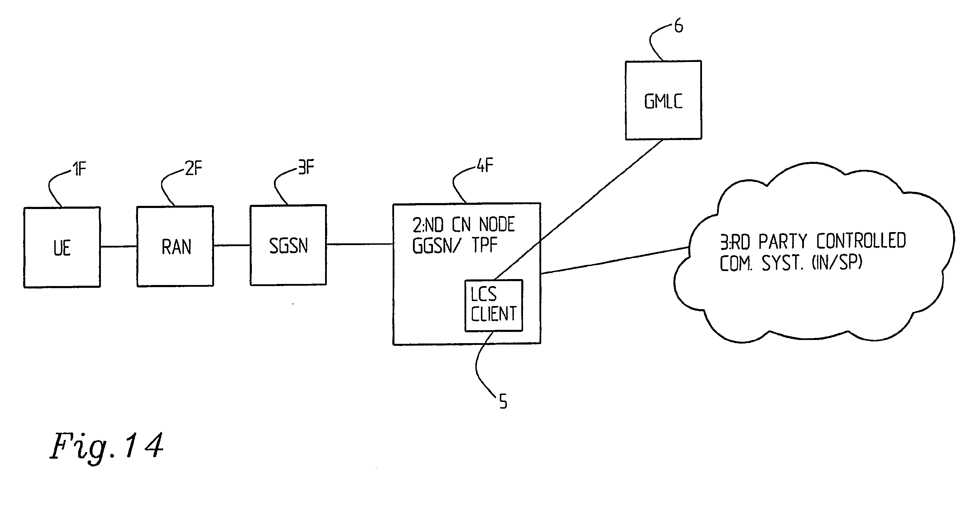

Fig. 14 schematically illustrates a block diagram in which an LCS client 5 is provided in a second CN node, GGSN 4F, or more specifically in the Traffic Plane Function thereof. The LCS client then subscribes for location location information from a GMLC 6 over the Le interface as discussed above. Location information about UE is provided over RAN 2F to SGSN 3F (or to an MSC where the UE is attached) which provides information to GMLC 6 over the Lg interface. (Location related information may be transferred from SGSN 3F to GGSN 4F using existing messaging as discussed earlier in the application, i.e. as dedicated IEs added to traffical packets over GTP-U or dedicated IEs added to e.g. Update PDP Context Requests. The initial location information, provided in the create PDP Context Request may help the LCS client to issue a tailored subscription for location reports from the GMLC.) However, the concept with an LCS client in the GGSN for collecting location information in communication with a GMLC is also applicable when location information is provided in other or conventional manners to GGSN.

It is an advantage of the implementation as described with reference to Figs. 13,14,15, that location information for mobile user stations with a session established can be collected in the GGSN e.g. for rating purposes. Particularly the collection of location information can be restricted to mobile user stations where the rating depends on location. Further, the collection of location information may be optimized per mobile user station with an appropriate accuracy to perform rating or other location dependent services. Most advantageously the collection of location information may utilize the circuit switched (CS) part over an MSC of the network to collect location information to the GMLC as can also be seen in Fig. 15. This is relevant in case the SGSN does not support LCS. Basically this means that the implementation of this embodiment does not depend on an SGSN supporting LCS, if it does not, the MSC can be used instead for the same purposes, which is extremely advantageous.

In one embodiment location information is expressed in terms that do not depend on RAN e.g. GPS (Global Positioning System) information collected by the GMLC. Still further the GMLC may include specialized logic to provide information tailored for the TPF needs, e.g. to provide time zone information for a mobile user station.

Thus, the embodiment described with reference to Figs. 13-15 combines the concept of Flow Based Charging and a possibility to implement rating that depends on user location without causing unnecessary signalling for mobile user stations where the location information actually is irrelevant or not needed for the rating or whatever purpose that is to be provided or offered.

The collection of location information is advantageously made adaptive such that unnecessarily frequent or accurate information collection is avoided, which results in benefits as far as signalling and performance is concerned.

This is particularly of importance when not already existing messaging is used for providing location related information, but it still provides a high variety and flexibility also for other purposes than reducing unnecessary signalling.

In Fig. 15 can be seen how mobile user stations UE are connected to a GERAN 2G and an UTRAN 2H respectively. The GERAN 2G is connected over the A-interface to a 2G-MSC 3G₁ and over the Gb-interface to a 2G-SGSN 3G₂. Further it is connected to a 3G-SGSN 3G₃ and an MSC-server 3G₄ over the Iu-interface. UTRAN 2H is connected to the 3G-SGSN 3G₃ and the MSC-server 3G₄ over the Iu-interface. All core network nodes, i.e. MSC, SGSN and MSC-server are connected over the Lg-interface with the GMLC 6₁, which communicates with the LCS client in GGSN 4G over the Le-interfaces as discussed above.

It should be clear that this merely illustrates one particular, advantageous, implementation of a second aspect of the present invention.

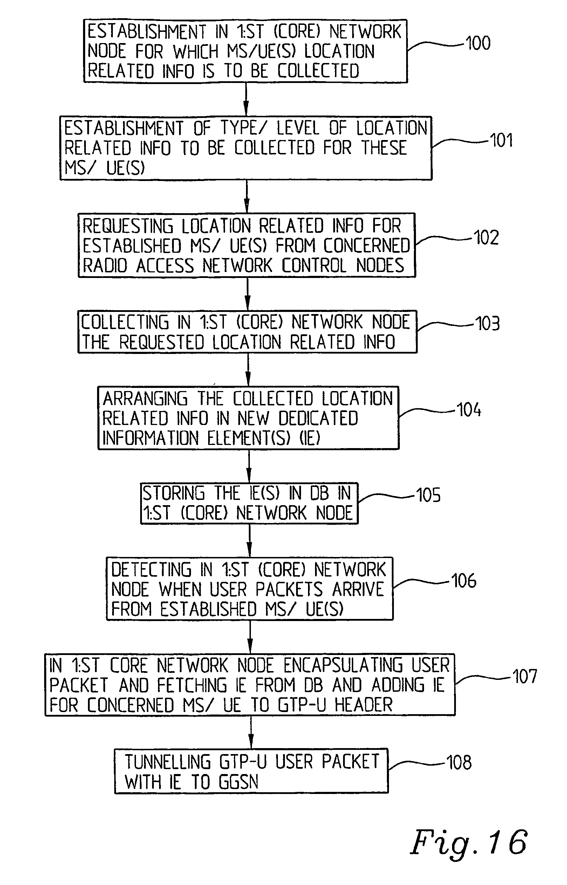

Fig. 16 is a flow diagram showing one embodiment of the present invention in which dedicated information elements are added to all the user packets, from a mobile user station for which location related information is to be provided to e.g. a GGSN. Hence, it is first established in a 1^{st} (core) network node, e.g. an SGSN (or a PDG in case of a WLAN access network being used) for which MS/UE(s) location related information is to be collected, 100. Location related information may have been requested from a GGSN, external networks; specific mobile user stations may be pointed out, or mobile user stations meeting given criteria may be indirectly indicated, or it may concern all mobile user stations handled by e.g. the SGSN. The 1^{st} (core) network node, in the following denoted SGSN for reasons of simplicity, then establishes which type/level of location related information that is to be collected, or that is of interest, in the latter case the SGSN only storing or sorting the relevant information, e.g. location information on cell-level or service area etc., 101.

Once this is done, SGSN requests such information, or generally location related information, from the radio access network, particularly control nodes such as RAN, RNC, UNC etc. as discussed earlier in the application, 102. The requested location related information is then collected in SGSN, 103. The collected location related information is, in SGSN, arranged in new, also called dedicated, information element(s) IE, 104.

The collected information, the IEs, are stored in storing means in SGSN, e.g. in a DB, particularly an existing subscriber database, e.g. the MM DB, even if also other alternatives are possible. The location related information is of course sorted and associated with the appropriate mobile user stations, 105.

Subsequently, when a user packet arrives in SGSN from an established mobile user station, this is detected, 106, the corresponding IE fetched from the DB, and the user packet is encapsulated in SGSN in a GTP-U packet and the fetched IE is added to the GTP-U header of the user packet, 107. The encapsulated user packet with the dedicated IE is then tunneled by GTP-U to the GGSN, 108. This is done for all user packets from all established mobile user stations.

It should be clear that one or more dedicated IEs can be added depending on how the information is arranged and in which location related information that is requested. It may e.g. be one IE for user location and one for time zone information etc.

The principle remains the same if the IE(s) are added to Update PDP Context Requests from e.g. SGSN to GGSN, but then the information is provided in the signalling plane.

As referred to earlier in the application an LCS client or correspondingly may be arranged in GGSN, and GGSN may use/forward the received location related information in many different manners, e.g. to external service providers.

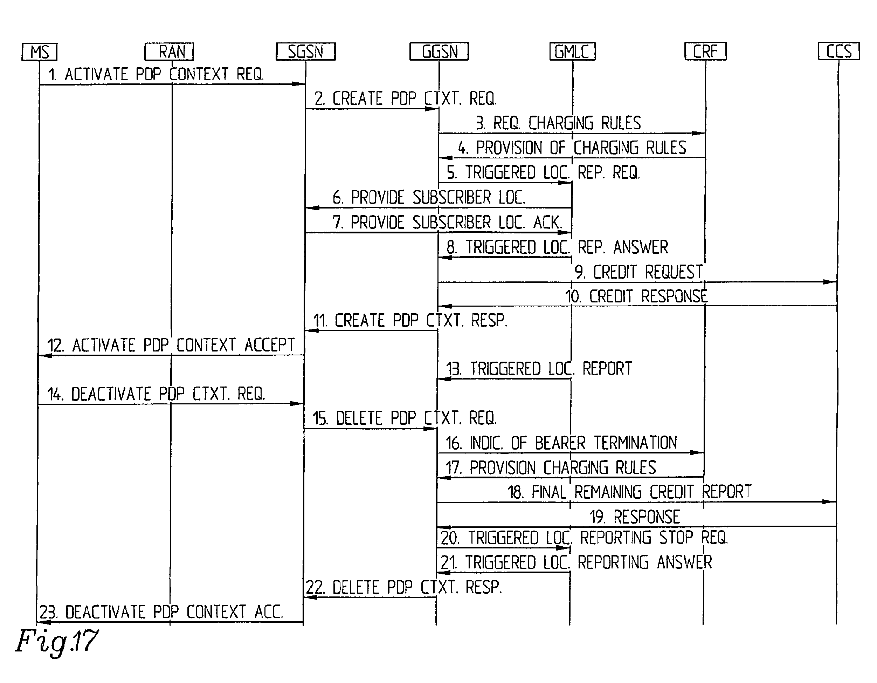

Fig. 17 is a sequence diagram describing the procedure when flow based charging in GGSN is extended or provided with differentiated rating depending on location, when an LCS client is provided in GGSN (cf. Figs. 13-15) for collecting location information for rating purposes. 1,2 relates to activation and creation of a PDP Context Request, in a conventional manner. A request for charging rules 3, is then sent from GGSN to CRF (Charging Rules Function), which provides the charging rules to GGSN, 4. Then, according to the invention, a triggered Location Reporting Request is sent from GGSN to GMLC, 5, which responds with a message Provide Subscriber Location, 6. This is acknowledged by SGSN to GMLC, 7. Then a Triggered Location Reporting Answer message is sent from GMLC to GGSN, 8. A Credit Request may then be sent from GGSN to CCS (On-line Charging System), 9, which responds with a Credit Response, 10. A Create PDP Context Response, 11, is then provided from GGSN to SGSN, 11, which sends an Activate PDP Context Accept to the MS, 12. 13 indicates a Triggered Location Report from GMLC to GGSN, which is novel like messages 5-8.

Later it is supposed that a Deactivate PDP Context Request is sent from MS to SGSN, 14, which thereupon sends a Delete PDP Context Request to GGSN, 15. GGSN then sends an Indication of Bearer Termination to CRF, 16, which sends a message Provision of Charging Rules to GGSN. After the sending of a message Final Remaining Credit Report to CCS, 18, and the response to that, 19, to GGSN, 19, a Triggered Location Reporting Stop Request, 20, is sent from GGSN to GMLC. GMLC returns an answer to GGSN, 21. These messages 20, 21 are also novel and terminate the subscription to location reporting.

Finally follows a Delete PDP Context Response, 22, and a Deactivate PDP Context Accept, 23, in a conventional manner. It should be clear that this merely illustrates one specific implementation.

The location related information may be used and taken advantage of in many different manners, e.g. for rating or charging purposes, but also for many other purposes, e.g. for providing services to relevant mobile user stations in a relevant area or location, e.g. for warning for traffic hazards in particular locations or to offer relevant services.

It should be clear that the invention by no means is limited to the specifically illustrated embodiments, but that it can be varied in a number of ways within the scope of the appended claims.

## Claims

1. A system for providing a core network node with location related information about one or more mobile user stations accessing the core network over an access network, comprising a number of radio access network nodes, a number of first network nodes or core network nodes serving communication of data, a number of second core network nodes comprising gateway core network nodes acting as gateways to external or third party controlled data communication networks and/or service providers, and means for providing from a first network node or core network node to a second core network node location related information of one or more mobile user stations obtained from the radio network access nodes,
**characterized in that**
said means are further adapted for providing said location related information in one or more dedicated information elements added to existing communication of user plane traffic messages between said first core network node and said second core network node, i.e. the payload.

2. A system according to claim 1,
c h a r a c t e r i z e d i n
that the second core network node comprises a GGSN, Gateway GPRS Support Node, and in that the first core network node comprises a SGSN, Serving GPRS Support Node.

3. A system according to any one of claims 1-2,
**characterized in**
**that** the access network is a WLAN, the radio network access nodes comprising access points or intermediate access network gateway nodes.

4. A system according to any one of claims 1-2,
**characterized in**
**that** the radio access network comprises an UMTS or a GPRS or GSM access network with radio access network control nodes comprising RNCs and/or BSCs, BTSs, Node-Bs or that the access network comprises an Unlicensed Mobile Access Network, UMA, with access network nodes.

5. A system according to any one of the preceding claims,
**characterized in**
**that** location related information about one or more mobile user stations is provided from the radio access network control nodes to the first network node automatically or according to a known procedure or upon request by the first network node.

6. A system according to claim 5,
**characterized in**
**that** a request from a first network node is defined so as to refer to one or more specific mobile user stations or to mobile user stations fulfilling one or more criteria.

7. A system according to any one of claims 5-6,
**characterized in**
**that** the location related information comprises one or more of information about the geographical location of a number of given mobile user stations on a given level, cell level, service area level, RA level or sub-cell level, information about the time zone in which a mobile user station currently is located, for mobile user stations for which a change of time zone is plausible and charging related information.

8. A system according to claim 5,
**characterized in**
**that** the first network node uses the Location Reporting Control procedure to request location related information of a given mobile user station.

9. A system according to any one of the preceding claims,
**characterized in**
**that** the dedicated information elements is/are added to the user plane messages, to one, to a limited number of, or to all GTP-U packets, concerning such mobile user stations for which the first core node has requested location related information.

10. A system according to any one of the preceding claims,
**characterized in**
**that** means are provided for adaptive location provisioning to a second core network node, said means comprising a client in the second core network node.

11. A core network node for a communications system supporting communication of packet data,
comprising means for establishing for which mobile user station(s) location related information is to be collected from the access network over which said mobile user stations are connected to said core network,
means for collecting and storing said location related information, and means for providing location related information to a second core network node acting as a gateway to external or third party controlled communication systems or service providers, **characterised in that** said information is provided in one or more dedicated information elements added to existing communication of user plane traffic messages between said first core network node and said second core network node.

12. A core network node according to claim 11,
**characterized in**
**that** it comprises an SGSN or a gateway node to a wireless access network.

13. A core network node according to any one of claims 11-12,
**characterized in**
**that** said means for providing the location related information comprises means for adding said information element or elements to all, to one or to a limited number of, messages or GTP-U packets sent in the user plane, for the established mobile user station(s).

14. A core network node according to claim 11,
**characterized in**
**that** said means for providing location related information are adapted to add said information to all traffical messages sent from mobile user stations for which the core network node has requested Location Reporting Control.

15. A core network node according to any one of claims 11-14,
**characterized in**
**that** it comprises means for adding said location related information to messages sent to the second core node when the location related information has changed for the mobile user station.

16. A core network node for a communications system supporting communication of packet data and acting as a gateway node to external or third party controlled communications system or service providers,
**characterized in**
**that** it comprises means for collecting location related information for mobile user stations from a first core network node supporting communication of data, said location related information being provided in one or more dedicated information elements added to existing communication of user plane traffic messages between said first core network node and said second core network node, said means comprising control means for, based on specified criteria, enabling adaptive collection of location related information for mobile user stations for which the specified criteria are met and for enabling adaptive reporting of such location related information to external or third party controlled data communications networks or service providers.

17. A core network node according to claim 16,
**characterized in that** it comprises a GGSN.

18. A core network node according to claim 16 or 17,
**characterized in that** said criteria are mobile user station location related.

19. A core network node according to claim 18,
**characterized in**
**that** the location related information comprises information about in which cell or service area a mobile user station is located or to which cell or service area a mobile user station is moving/has moved and/or information about in which time zone a mobile user is located or a change of time zone, such location related information only being collected for mobile stations for which a change of time zones is plausible.

20. A core network node according to any one of claims 16-19,
**characterized in**
**that** said control means comprises a Location Services Client allowing adaptive collection of location related information.

21. A core network node according to any one of claims 16-20,
**characterized in**
**that** means are provided for transferring said location related information to a GMLC, Gateway Mobile Location Center, allowing for location based service provisioning or location based charging, or to a third party service provider to allow said third party service provider to provide location based services.

22. A method for providing a second core network node, acting as gateway to an external or third party controlled data communications system, with location related information of one or more mobile user stations accessing the core network over an access network,
**characterized in**
**that** it comprises the steps of:
- establishing at least for which mobile user stations location related information is to be collected in a first network node;
- collecting said location related information for said mobile user stations;
- storing said location related information in storing means in or associated with said first network node;
- arranging said location related information in dedicated information element(s);
- adding said dedicated information element(s) to user plane traffic messages sent independently of said information element from said first network node to the second core network node.

23. A method according to claim 22,
**characterized in**
**that** the step of adding information elements to messages comprises:
- adding the information element(s) to all traffical packets sent in the user plane for the concerned mobile user stations.

24. A method according to claims 22 or 23.
**characterized in**
**that** it comprises the step of:
- adaptively reporting location related information comprising geographical location information and/or time zone information to allow for location dependent rating or service provisioning on a per mobile user station basis.

## Patentansprüche

1. System zum Bereitstellen eines Kernnetzwerkknotens mit einer ortsbezogenen Information über eine oder mehrere Mobilnutzerstationen, welche auf das Kernnetzwerk über ein Zugriffsnetzwerk zugreifen, welches eine Anzahl von Funkzugriff-Netzwerkknoten, eine Anzahl von ersten Netzwerkknoten oder Kernnetzwerkknoten, welche einer Kommunikation von Daten dienen, eine Anzahl von zweiten Kernnetzwerkknoten, welche Gateway-Kernnetzwerkknoten, welche als Gateways an externe oder über eine dritte Partei gesteuerte Datenkommunikationsnetzwerke und/oder DienstBereitsteller wirken, enthalten, und ein Mittel zum Bereitstellen, von einem ersten Netzwerkknoten oder Kernnetzwerkknoten, an einen zweiten Kernnetzwerkknoten, von einer ortsbezogenen Information von einer oder mehreren Mobilnutzerstationen, welche von den Funknetzwerk-Zugriffsknoten erlangt ist, enthält,
**dadurch gekennzeichnet, dass**
die Mittel ferner dazu angepasst sind, um die ortsbezogene Information in einem oder mehreren zugewiesenen Informationselementen, welche einer bestehenden Kommunikation von Nutzerebene-Verkehrsmeldungen hinzugefügt sind, zwischen dem ersten Kernnetzwerkknoten und dem zweiten Kernnetzwerkknoten, das heißt die Nutzlast, bereitzustellen.

2. System nach Anspruch 1, **dadurch gekennzeichnet, dass** der zweite Kernnetzwerkknoten ein GGSN, Gateway GPRS Support Node, enthält, und dass der erste Kernnetzwerkknoten ein SGSN, Serving GPRS Support Node, enthält.

3. System nach einem der Ansprüche 1 bis 2, **dadurch gekennzeichnet, dass** das Zugriffsnetzwerk ein WLAN ist, wobei die Funknetzwerk-Zugriffsknoten Zugriffspunkte oder Mitten-Zugriffsnetzwerk-Gatewayknoten enthalten.

4. System nach einem der Ansprüche 1 bis 2, **dadurch gekennzeichnet, dass** das Funkzugriffsnetzwerk ein UMTS oder ein GPRS oder GSM Zugriffsnetzwerk mit Funkzugriffsnetzwerk-Steuerknoten enthält, welche RNCs und/oder BSCs, BTSs, Node-Bs enthalten, oder dass das Zugriffsnetzwerk ein Unlicensed Mobile Access Netzwerk, UMA, mit Zugriffsnetzwerkknoten enthält.

5. System nach einem der vorhergehenden Ansprüche, **dadurch gekennzeichnet, dass** die ortsbezogene Information über eine oder mehrere Mobilnutzerstationen von den Funkzugriffsnetzwerk-Steuerknoten an den ersten Netzwerkknoten automatisch oder gemäß einem bekannten Ablauf oder auf eine Anfrage durch den ersten Netzwerkknoten bereitgestellt ist.

6. System nach Anspruch 5, **dadurch gekennzeichnet, dass** eine Anfrage von einem ersten Netzwerkknoten derart bestimmt ist, dass sie sich auf eine oder mehrere spezifische Mobilnutzerstationen oder auf Mobilnutzerstationen, welche eine oder mehrere Kriterien erfüllen, bezieht.

7. System nach einem der Ansprüche 5 bis 6, **dadurch gekennzeichnet, dass** die ortsbezogene Information eine oder mehrere Informationen über den geografischen Ort von einer Anzahl von vorgegebenen Mobilnutzerstationen auf einem vorgegebenen Pegel, Rufpegel, Dienstbereichpegel, RA-Pegel oder Unterzellenpegel, eine Information über die Zeitzone, in welcher sich eine Mobilnutzerstation derzeit befindet, für Mobilnutzerstationen, für welche eine Zeitzonenänderung plausibel ist, und eine verrechnungsbezogene Information enthält.

8. System nach Anspruch 5, **dadurch gekennzeichnet, dass** der erste Netzwerkknoten den Ortsmelde-Steuerablauf zur Anfrage von einer ortsbezogenen Information von einer vorgegebenen Mobilnutzerstation nutzt.

9. System nach einem der vorhergehenden Ansprüche, **dadurch gekennzeichnet, dass** das zugewiesene Informationselement, bzw. die zugewiesenen Informationselemente, den Nutzerebenemeldungen an einem, an eine beschränkte Anzahl von, oder an alle GTP-U-Pakete, bezogen auf solche Mobilnutzerstationen, bei welchen der erste Kernknoten eine ortsbezogene Information angefragt hat, hinzugefügt wird, bzw. werden.

10. System nach einem der vorhergehenden Ansprüche, **dadurch gekennzeichnet, dass** die Mittel zur adaptiven Ortsbereitstellung an einen zweiten Kernnetzwerkknoten bereitgestellt sind, wobei die Mittel einen Client im zweiten Kernnetzwerkknoten enthalten.

11. Kernnetzwerkknoten für ein Kommunikationssystem, welches eine Kommunikation von Datenpaketen unterstützt, welcher
ein Mittel zum Aufbauen, für welche Mobilnutzerstation, bzw. Mobilnutzerstationen, eine ortsbezogene Information von dem Zugriffsnetzwerk einzusammeln ist, über welches die Mobilnutzerstationen mit dem Kernnetzwerk verbunden sind,
ein Mittel zum Einsammeln und Speichern der ortsbezogenen Information, und
ein Mittel zum Bereitstellen der ortsbezogenen Information an einen zweiten Kernnetzwerkknoten, welcher als ein Gateway an externe oder über eine dritte Partei gesteuerte Kommunikationssysteme oder Dienstbereitsteller wirkt, enthält,
**dadurch gekennzeichnet, dass** die Information in einem oder mehreren zugewiesenen Informationselementen bereitgestellt ist, welche einer bestehenden Kommunikation von Benutzerebene-Verkehrsmeldungen zwischen dem ersten Kernnetzwerkknoten und dem zweiten Kernnetzwerkknoten hinzugefügt sind.

12. Kernnetzwerkknoten nach Anspruch 11, **dadurch gekennzeichnet, dass** er einen SGSN oder einen Gateway-Knoten an ein Drahtlos-Zugriffsnetzwerk enthält.

13. Kernnetzwerkknoten nach einem der Ansprüche 11 bis 12, **dadurch gekennzeichnet, dass** das Mittel zum Bereitstellen der ortsbezogenen Information ein Mittel zum Hinzufügen des Informationselements oder der Elemente an alle, an eine oder an eine beschränkte Anzahl von Meldungen oder GTP-U-Paketen, welche in der Nutzerebene gesendet sind, für die aufgebaute Mobilnutzerstation, bzw. aufgebauten Mobilnutzerstationen, enthält.

14. Kernnetzwerkknoten nach Anspruch 11, **dadurch gekennzeichnet, dass** die Mittel zum Bereitstellen der ortsbezogenen Information dazu angepasst sind, um die Information an alle Verkehrsmeldungen hinzuzufügen, welche von Mobilnutzerstationen gesendet sind, für welche der Kernnetzwerkknoten eine Ortsmeldesteuerung angefragt hat.

15. Kernnetzwerkknoten nach einem der Ansprüche 11 bis 14, **dadurch gekennzeichnet, dass** er ein Mittel zum Hinzufügen der ortsbezogenen Information an Meldungen enthält, welche an den zweiten Kernknoten gesendet sind, wenn sich die ortsbezogene Information für die Mobilnutzerstation geändert hat.

16. Kernnetzwerkknoten für ein Kommunikationssystem, welches einer Kommunikation von Paketdaten dient und als ein Gateway-Knoten an ein externes oder über eine dritte Partei gesteuertes Kommunikationssystem oder Dienstbereitsteller wirkt, **dadurch gekennzeichnet, dass** es ein Mittel zum Einsammeln von einer ortsbezogenen Information für Mobilnutzerstationen von einem ersten Kernnetzwerkknoten, welcher einer Kommunikation von Daten dient, enthält, wobei die ortsbezogene Information in einem oder mehreren zugewiesenen Informationselementen bereitgestellt ist, welche einer bestehenden Kommunikation von Nutzerebene-Verkehrsmeldungen zwischen dem ersten Kernnetzwerkknoten und dem zweiten Kernnetzwerkknoten hinzugefügt sind, wobei das Mittel ein Steuermittel enthält, um, basierend auf spezifizierten Kriterien, eine adaptive Einsammlung von einer ortsbezogenen Information für Mobilnutzerstationen zu ermöglichen, bei welchen die spezifizierten Kriterien eingehalten sind, und um eine adaptive Meldung von einer solchen ortsbezogenen Information an externe oder über eine dritte Partei gesteuerte Datenkommunikationsnetzwerke oder Dienstbereitsteller zu ermöglichen.

17. Kernnetzwerkknoten nach Anspruch 16, **dadurch gekennzeichnet, dass** es ein GGSN enthält.

18. Kernnetzwerkknoten nach Anspruch 16 oder 17, **dadurch gekennzeichnet, dass** die Kriterien auf einen Mobilnutzerstation-Ort bezogen sind.

19. Kernnetzwerkknoten nach Anspruch 18, **dadurch gekennzeichnet, dass** die ortsbezogene Information eine Information darüber, in welcher Zelle oder in welchem Dienstbereich sich eine Mobilnutzerstation befindet, oder an welche Zelle oder welchen Dienstbereich sich eine Mobilnutzerstation bewegt, bzw. bewegt hat, und/oder eine Information darüber, in welcher Zeitzone sich ein Mobilnutzer befindet oder über eine Änderung von der Zeitzone, enthält, wobei eine solche ortsbezogene Information lediglich bei Mobilstationen eingesammelt wird, bei welchen eine Änderung von Zeitzonen plausibel ist.

20. Kernnetzwerkknoten nach einem der Ansprüche 16 bis 19, **dadurch gekennzeichnet, dass** das Steuermittel einen Ortsdienst-Client enthält, welcher eine adaptive Einsammlung von einer ortsbezogenen Information erlaubt.

21. Kernnetzwerkknoten nach einem der Ansprüche 16 bis 20, **dadurch gekennzeichnet, dass** die Mittel zur Übertragung der ortsbezogenen Information an ein GMLC, Gateway Mobile Location Center, welches eine ortsbasierende Dienstbereitstellung oder ortsbasierende Verrechnung erlaubt, oder an einen Dritte-Partei-Dienstbereitsteller bereitgestellt sind, um es dem Dritte-Partei-Dienstbereitsteller zu erlauben, die ortsbasierenden Dienste bereitzustellen.

22. Verfahren zum Bereitstellen eines zweiten Kernnetzwerkknotens, welcher als ein Gateway an ein externes oder über eine dritte Partei gesteuertes Datenkommunikationssystem wirkt, mit einer ortsbezogenen Information von einer oder von mehreren Mobilnutzerstationen, welche auf das Kernnetzwerk über ein Zugriffsnetzwerk zugreifen, **dadurch gekennzeichnet, dass** es die Schritte enthält:
Aufbauen, für zumindest welche Mobilnutzerstationen eine ortsbezogene Information einzusammeln ist, in einem ersten Netzwerkknoten;
Einsammeln der ortsbezogenen Information für die Mobilnutzerstationen;
Speichern der ortsbezogenen Information in einem Speichermittel in oder in Zusammenhang mit dem ersten Netzwerkknoten;
Anordnen der ortsbezogenen Information in einem zugewiesenen Informationselement, bzw. in zugewiesenen Informationselementen;
Hinzufügen des zugewiesenen Informationselements, bzw. der zugewiesenen Informationselemente, an Nutzerebene-Verkehrsmeldungen, welche unabhängig von dem Informationselement von dem ersten Netzwerkknoten an den zweiten Kernnetzwerkknoten gesendet werden.

23. Verfahren nach Anspruch 22, **dadurch gekennzeichnet, dass** der Schritt des Hinzufügens der Informationselemente an die Meldungen enthält:
Hinzufügen des Informationselements, bzw. der Informationselemente, an alle Verkehrspakete, welche in der Nutzerebene für die betroffenen Mobilnutzerstationen gesendet werden.

24. Verfahren nach Anspruch 22 oder 23, **dadurch gekennzeichnet, dass** es den Schritt enthält:
Adaptives Melden der ortsbezogenen Information, welche eine geografische Ortsinformation und/oder eine Zeitzoneninformation enthält, um eine ortsabhängige Verrechnung oder eine Dienstbereitstellung auf einer Pro-Mobilnutzerstation-Basis zu erlauben.

## Revendications

1. Système destiné à fournir à un noeud de réseau central des informations liées à la position d'une ou plusieurs stations mobiles d'utilisateurs accédant au réseau central via un réseau d'accès comprenant un certain nombre de noeuds radio de réseau d'accès, un certain nombre de premiers noeuds de réseau ou noeuds de réseau central servant à la communication de données, un certain nombre de seconds noeuds de réseau central comprenant des noeuds-passerelles de réseau central jouant le rôle de passerelles vis-à-vis de réseaux de communication de données et/ou de fournisseurs de services externes ou commandés par des tierces parties et un moyen destiné à fournir entre un premier noeud de réseau ou noeud de réseau central et un second noeud de réseau central des informations liées à la position d'une ou plusieurs stations mobiles d'utilisateurs, obtenues auprès des noeuds d'accès du réseau radio,
**caractérisé en ce que** ledit moyen est en outre conçu pour fournir lesdites informations liées à la position sous la forme d'un ou plusieurs éléments d'information spécialisés ajoutés à la communication existante de messages de trafic dans le plan utilisateur, entre ledit premier noeud de réseau central et ledit second noeud de réseau central, c'est-à-dire la charge utile.

2. Système selon la revendication 1, **caractérisé en ce que** le second noeud de réseau central est constitué d'un noeud GGSN, pour « *Gateway GPRS Support Node* » - Noeud de support GPRS faisant fonction de passerelle, et **en ce que** le premier noeud de réseau central est constitué d'un noeud SGSN, pour « *Serving GPRS Support Node* » - Noeud de support GPRS de desserte.

3. Système selon l'une quelconque des revendications 1 et 2, **caractérisé en ce que** le réseau d'accès est un réseau local sans fil, les noeuds d'accès du réseau radio constituant des points d'accès ou des noeuds-passerelles intermédiaires de réseau d'accès.

4. Système selon l'une quelconque des revendications 1 et 2, **caractérisé en ce que** le réseau d'accès radio est constitué d'un réseau d'accès UMTS ou GPRS ou GSM avec des noeuds de commande de réseau d'accès radio, comprenant des contrôleurs de réseau radio, RNC pour *« Radio Network Controller* », et/ou des contrôleurs de stations de base (BSC), des stations émettrices-réceptrices de base (BTS) ou des noeuds B, ou **en ce que** le réseau d'accès est constitué d'un réseau d'accès mobile non licencié, UMA pour *« Unlicensed Mobile Access* », avec des noeuds de réseau d'accès.

5. Système selon l'une quelconque des revendications précédentes, **caractérisé en ce que** les informations liées à la position d'une ou plusieurs stations mobiles d'utilisateurs sont fournies par des noeuds de commande du réseau d'accès radio au premier noeud de réseau automatiquement ou selon une procédure connue ou sur demande du premier noeud de réseau.

6. Système selon la revendication 5, **caractérisé en ce qu'**une demande du premier noeud de réseau est définie de manière à se référer à une ou plusieurs stations mobiles spécifiques d'utilisateurs ou à des stations mobiles d'utilisateurs répondant à un ou plusieurs critères.

7. Système selon l'une quelconque des revendications 5 et 6, **caractérisé en ce que** les informations liées à la position comprennent une ou plusieurs des informations suivantes : informations sur la position géographique d'un certain nombre de stations mobiles données d'utilisateurs à un niveau donné, à savoir niveau de la cellule, niveau de la zone de desserte, niveau de l'accès radio ou niveau inférieur à la cellule, informations sur un fuseau horaire dans lequel une station mobile d'utilisateur se trouve actuellement, pour des stations mobiles d'utilisateurs qui peuvent changer de fuseau horaire, et informations liées à la facturation.

8. Système selon la revendication 5, **caractérisé en ce que** le premier noeud de réseau utilise la procédure de commande de signalement de position pour demander des informations liées à la position d'une station mobile donnée d'utilisateur.

9. Système selon l'une quelconque des revendications précédentes, **caractérisé en ce que** les éléments d'informations spécialisés sont ajoutés aux messages dans le plan utilisateur, dans un paquet GTP-U, dans un nombre limité de paquets GTP-U ou dans leur totalité, qui concernent les stations mobiles d'utilisateurs pour lesquelles le premier noeud central a demandé des informations liées à la position.

10. Système selon l'une quelconque des revendications précédentes, **caractérisé en ce qu'**un moyen est prévu pour fournir une position de manière adaptative à un second noeud de réseau central, ledit moyen comprenant un client dans le second noeud de réseau central.

11. Noeud de réseau central pour un système de communication supportant la communication de données en paquets, comprenant :
un moyen destiné à établir pour quelles stations mobiles d'utilisateurs des informations liées à la position doivent être recueillies auprès du réseau d'accès par lequel lesdites stations mobiles d'utilisateurs sont connectées audit réseau central ;
un moyen destiné à collecter et à sauvegarder lesdites informations liées à la position ; et
un moyen destiné à fournir des informations liées à la position à un second noeud de réseau central jouant le rôle de passerelle vis-à-vis de systèmes de communication ou de fournisseurs d'accès externes ou commandés par des tierces parties,
**caractérisé en ce que** lesdites informations sont fournies dans un ou plusieurs éléments d'information spécialisés ajoutés à la communication existante de messages de trafic dans le plan utilisateur entre ledit premier noeud de réseau central et ledit second noeud de réseau central.

12. Noeud de réseau central selon la revendication 11, **caractérisé en ce qu'**il comprend un noeud SGSN ou un noeud-passerelle vers un réseau d'accès sans fil.

13. Noeud de réseau central selon l'une quelconque des revendications 11 et 12, **caractérisé en ce que** ledit moyen destiné à fournir les informations liées à la position comprend un moyen destiné à ajouter ledit ou lesdits éléments d'information à tous les messages ou paquets GTP-U, à un seul d'entre eux ou à un nombre limité de ceux-ci, qui sont envoyés dans le plan de l'utilisateur pour la ou les stations mobiles d'utilisateurs établies.

14. Noeud de réseau central selon la revendication 11, **caractérisé en ce que** ledit moyen destiné à fournir des informations liées à la position est conçu pour ajouter lesdites informations à tous les messages de trafic envoyés depuis des stations mobiles d'utilisateurs pour lesquelles le noeud de réseau central a demandé une commande de signalement de position.

15. Noeud de réseau central selon l'une quelconque des revendications 11 à 14, **caractérisé en ce qu'**il comprend un moyen destiné à ajouter lesdites informations liées à la position à des messages envoyés au second noeud central lorsque les informations liées à la position ont changé pour la station mobile d'utilisateur.

16. Noeud de réseau central pour un système de communication supportant la communication de données en paquets et jouant le rôle de noeud-passerelle vis-à-vis d'un système de communication ou de fournisseurs de services externes ou commandés par des tierces parties,
**caractérisé en ce qu'**il comprend un moyen destiné à recueillir des informations liées à la position pour des stations mobiles d'utilisateurs auprès d'un premier noeud de réseau central supportant la communication de données, lesdites informations liées à la position étant fournies dans un ou plusieurs éléments d'information spécialisés ajoutés à la communication existante de messages de trafic dans le plan utilisateur entre ledit premier noeud du réseau central et ledit second noeud du réseau central, ledit moyen comprenant un moyen de commande qui, sur la base de critères spécifiés, permet la collecte adaptative d'informations liées à la position pour des stations mobiles d'utilisateurs pour lesquelles les critères spécifiés sont satisfaits et qui permet de rapporter de manière adaptative ces informations liées à la position à des réseaux de communication de données ou fournisseurs de services externes ou commandés par des tierces parties.

17. Noeud de réseau central selon la revendication 16, **caractérisé en ce qu'**il comprend un noeud GGSN.

18. Noeud de réseau central selon la revendication 16 ou 17, **caractérisé en ce que** lesdits critères sont liés à la position de la station mobile d'utilisateur.

19. Noeud de réseau central selon la revendication 18, **caractérisé en ce que** les informations liées à la position comprennent des informations sur la cellule ou la zone de desserte dans laquelle se trouve une station mobile d'utilisateur ou sur la cellule ou la zone de desserte vers laquelle se déplace ou s'est déplacée une station mobile d'utilisateur et/ou des informations sur le fuseau horaire dans lequel se trouve un utilisateur mobile ou sur un changement de fuseau horaire, ces informations liées à la position n'étant recueillies que pour des stations mobiles pour lesquelles un changement de fuseau horaire est plausible.

20. Noeud de réseau central selon l'une quelconque des revendications 16 à 19, **caractérisé en ce que** ledit moyen de commande comprend un client de services de localisation permettant la collecte adaptative d'informations liées à la position.

21. Noeud de réseau central selon l'une quelconque des revendications 16 à 20, **caractérisé en ce qu'**un moyen est prévu pour le transfert desdites informations liées à la position vers un centre de localisation de mobiles faisant fonction de passerelle, GMLC, pour « *Gateway Mobile Location Center* », ce qui permet la fourniture de services géolocalisés ou la facturation géolocalisée, ou vers un fournisseur de service tiers afin de permettre audit fournisseur de services tiers de fournir des services géolocalisés.

22. Procédé destiné à fournir à un second noeud de réseau central, jouant le rôle de passerelle vis-à-vis d'un système de communication de données externe ou commandé par une tierce partie, des informations liées à la position d'une ou plusieurs stations mobiles d'utilisateurs accédant au réseau central par un réseau d'accès,
**caractérisé en ce qu'**il comprend les étapes consistant à :
- établir sur un premier noeud de réseau au moins pour quelles stations mobiles d'utilisateurs les informations liées à la position doivent être recueillies ;
- recueillir lesdites informations liées à la position pour lesdites stations mobiles d'utilisateurs ;
- sauvegarder lesdites informations liées à la position dans un moyen de stockage implanté dans ledit premier noeud de réseau ou associé à celui-ci ;
- placer lesdites informations liées à la position dans un ou plusieurs éléments d'information spécialisés ;
- ajouter ledit ou lesdits éléments d'information spécialisés à des messages de trafic du plan utilisateur qui sont envoyés indépendamment dudit élément d'information, entre ledit premier noeud de réseau et le second noeud de réseau central.

23. Procédé selon la revendication 22, **caractérisé en ce que** l'étape d'addition des éléments d'information aux messages comprend l'étape consistant à :
- ajouter le ou les éléments d'information à tous les paquets de trafic envoyés dans le plan utilisateur pour les stations mobiles d'utilisateurs concernées.

24. Procédé selon la revendication 22 ou 23, **caractérisé en ce qu'**il comprend l'étape consistant à :
- rapporter de manière adaptative des informations liées à la position comprenant des informations de position géographique et/ou des informations de fuseau horaire afin de permettre une facturation ou une fourniture de services géolocalisée, station mobile d'utilisateur par station mobile d'utilisateur.
